# EUROPEAN PATENT APPLICATION

(11) **EP 3 806 377 A1**
(43) Date of publication of application: **14.04.2021**
(21) Application number: 20200256.4
(22) Date of filing: 06.10.2020
(51) Int. Cl.: H04L 5/00

(54) **PHYSICAL DOWNLINK SHARED CHANNEL WITH TYPE-B MAPPING FOR NR**

(30) Priority: 07.10.2019 US 201962911906 P
(71) Applicant: INTEL Corporation, Santa Clara, CA 95054 (US)
(72) Inventor: CHATTERJEE, Debdeep, San Jose, California, 95128 (US); DAVYDOV, Alexei Vladimirovich, 603132 Nizhny Novgorod (RU); KWAK, Yongjun, Portland, Oregon, 97229 (US); MONDAL, Bishwarup, San Ramon, California, 94583 (US); SENGUPTA, Avik, San Jose, California, 95134 (US)
(74) Representative: Schwegman Lundberg Woessner Limited

(57) **Abstract**

An apparatus for use in a UE includes processing circuitry coupled to a memory. To configure the UE for receiving a PDSCH transmission in a 5G-NR communication network, the processing circuitry is to decode RRC signaling including DL DM-RS configuration information specifying a first DM-RS position and, optionally, up to three additional DM-RS positions within a PDSCH transmission. DM-RS positions configured for the PDSCH transmission are determined based on a duration in OFDM symbols of scheduled PDSCH resources for the PDSCH transmission and the DM-RS configuration information. The PDSCH transmission is configured in accordance with PDSCH mapping type B and a number of the OFDM symbols is configurable to be greater than 7. The DM-RS received within the PDSCH transmission at the determined DM-RS positions is decoded.

## Description

### PRIORITY CLAIM

This application claims the benefit of priority to United States Provisional Patent Application Serial No. 62/911,906, filed October 7, 2019, and entitled "DOWNLINK PHYSICAL SHARED CHANNEL WITH TYPE-B MAPPING FOR NR".

### TECHNICAL FIELD

Aspects pertain to wireless communications. Some aspects relate to wireless networks including 3GPP (Third Generation Partnership Project) networks, 3GPP LTE (Long Term Evolution) networks, 3GPP LTE-A (LTE Advanced) networks, and fifth-generation (5G) networks including 5G new radio (NR) (or 5G-NR) networks and 5G-LTE networks such as 5G NR unlicensed spectrum (NR-U) networks. Other aspects are directed to systems and methods for configuring physical downlink shared channel (PDSCH) with Type-B mapping for NR and 5G-NR networks.

### BACKGROUND

Mobile communications have evolved significantly from early voice systems to today's highly sophisticated integrated communication platform. With the increase in different types of devices communicating with various network devices, usage of 3GPP LTE systems has increased. The penetration of mobile devices (user equipment or UEs) in modern society has continued to drive demand for a wide variety of networked devices in many disparate environments. Fifth-generation (5G) wireless systems are forthcoming and are expected to enable even greater speed, connectivity, and usability. Next generation 5G networks (or NR networks) are expected to increase throughput, coverage, and robustness and reduce latency and operational and capital expenditures. 5G-NR networks will continue to evolve based on 3GPP LTE-Advanced with additional potential new radio access technologies (RATs) to enrich people's lives with seamless wireless connectivity solutions delivering fast, rich content and services. As current cellular network frequency is saturated, higher frequencies, such as millimeter wave (mmWave) frequency, can be beneficial due to their high bandwidth.

Potential LTE operation in the unlicensed spectrum includes (and is not limited to) the LTE operation in the unlicensed spectrum via dual connectivity (DC), or DC-based LAA, and the standalone LTE system in the unlicensed spectrum, according to which LTE-based technology solely operates in the unlicensed spectrum without requiring an "anchor" in the licensed spectrum, called MulteFire. MulteFire combines the performance benefits of LTE technology with the simplicity of Wi-Fi-like deployments.

Further enhanced operation of LTE systems in the licensed as well as unlicensed spectrum is expected in future releases and 5G systems. Such enhanced operations can include techniques for configuring PDSCH with Type-B mapping for NR and 5G-NR networks.

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various aspects discussed in the present document.
FIG. 1A illustrates an architecture of a network, in accordance with some aspects.
FIG. 1B and FIG. 1C illustrate a non-roaming 5G system architecture in accordance with some aspects.
FIG. 2 shows example diagrams for Demodulation Reference Signal (DM-RS) positions for Physical Downlink Shared Channel (PDSCH) mapping, in accordance with some embodiments.
FIG. 3 shows an example diagram for DM-RS symbol position shifting, in accordance with some embodiments.
FIG. 4 - FIG. 6 show exemplary process flowcharts, in accordance with some embodiments.
FIG. 7 illustrates a block diagram of a communication device such as an evolved Node-B (eNB), a new generation Node-B (gNB), an access point (AP), a wireless station (STA), a mobile station (MS), or a user equipment (UE), in accordance with some aspects.

### DETAILED DESCRIPTION

The following description and the drawings sufficiently illustrate aspects to enable those skilled in the art to practice them. Other aspects may incorporate structural, logical, electrical, process, and other changes. Portions and features of some aspects may be included in or substituted for, those of other aspects.

For the present document, the following terms and definitions apply to the examples and aspects discussed herein.

The term "circuitry" as used herein refers to, is part of, or includes hardware components such as an electronic circuit, a logic circuit, a processor (shared, dedicated, or group), and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some aspects, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these aspects, the combination of hardware elements and program code may be referred to as a particular type of circuitry.

The term "processor circuitry" as used herein refers to, is part of or includes circuitry capable of sequentially and automatically carrying out a sequence of arithmetic or logical operations, or recording, storing, and/or transferring digital data. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. The terms "application circuitry" and/or "baseband circuitry" may be considered synonymous to, and may be referred to as, "processor circuitry."

The term "interface circuitry" as used herein refers to, is part of or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "UE" as used herein refers to a device with radio communication capabilities and may describe a remote user of network resources in a communications network. The term "user equipment" or "UE" may be considered synonymous to and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized network function (VNF), Network Functions Virtualization (NFV) Infrastructure (NFVI), and/or the like.

The term "computer system" as used herein refers to any type of interconnected electronic devices, computer devices, or components thereof. Additionally, the term "computer system" and/or "system" may refer to various components of a computer that are communicatively coupled with one another. Furthermore, the term "computer system" and/or "system" may refer to multiple computing devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to providing a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by a physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT to transmit and receive information.

The terms "instantiate," "instantiation," and the like as used herein refers to the creation of an instance. An "instance" also refers to a concrete occurrence of an object, which may occur, for example, during the execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or ink, and/or the like.

The term "information element" refers to a structural element containing one or more fields. The term "field" refers to the individual contents of an information element, or a data element that contains content. The term "SMTC" refers to an SSB-based measurement timing configuration configured by SSB-MeasurementTimingConfiguration. The term "SSB" refers to a synchronization signal (SS)/ Physical Broadcast Channel (PBCH) block. The term "a "Primary Cell" refers to the MCG cell, operating on the primary frequency, in which the UE either performs the initial connection establishment procedure or initiates the connection reestablishment procedure. The term "Primary SCG Cell" refers to the SCG cell in which the UE performs random access when performing the Reconfiguration with Sync procedure for DC operation. The term "Secondary Cell" refers to a cell providing additional radio resources on top of a Special Cell for a UE configured with CA. The term "Secondary Cell Group" refers to the subset of serving cells including the PSCell and zero or more secondary cells for a UE configured with DC. The term "Serving Cell" refers to the primary cell for a UE in RRC_CONNECTED not configured with CA/DC there is only one serving cell including the primary cell. The term "serving cell" or "serving cells" refers to the set of cells including the Special Cell(s) and all secondary cells for a UE in RRC_CONNECTED configured with CA/. The term "Special Cell" refers to the PCell of the MCG or the PSCell of the SCG for DC operation; otherwise, the term "Special Cell" refers to the Pcell.

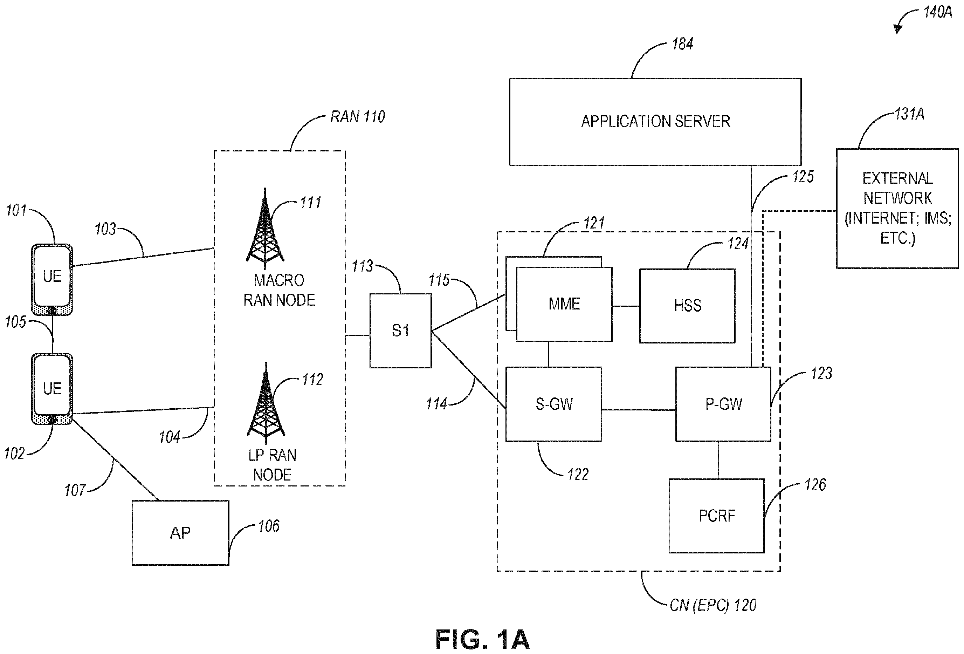

FIG. 1A illustrates an architecture of a network in accordance with some aspects. The network 140A is shown to include user equipment (UE) 101 and UE 102. The UEs 101 and 102 are illustrated as smartphones (e.g., handheld touchscreen mobile computing devices connectable to one or more cellular networks) but may also include any mobile or non-mobile computing device, such as Personal Data Assistants (PDAs), pagers, laptop computers, desktop computers, wireless handsets, drones, or any other computing device including a wired and/or wireless communications interface. The UEs 101 and 102 can be collectively referred to herein as UE 101, and UE 101 can be used to perform one or more of the techniques disclosed herein.

Any of the radio links described herein (e.g., as used in the network 140A or any other illustrated network) may operate according to any exemplary radio communication technology and/or standard.

LTE and LTE-Advanced are standards for wireless communications of highspeed data for UE such as mobile telephones. In LTE-Advanced and various wireless systems, carrier aggregation is a technology according to which multiple carrier signals operating on different frequencies may be used to carry communications for a single UE, thus increasing the bandwidth available to a single device. In some aspects, carrier aggregation may be used where one or more component carriers operate on unlicensed frequencies.

Aspects described herein can be used in the context of any spectrum management scheme including, for example, dedicated licensed spectrum, unlicensed spectrum, (licensed) shared spectrum (such as Licensed Shared Access (LSA) in 2.3-2.4 GHz, 3.4-3.6 GHz, 3.6-3.8 GHz, and further frequencies and Spectrum Access System (SAS) in 3.55-3.7 GHz and further frequencies).

Aspects described herein can also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.

In some aspects, any of the UEs 101 and 102 can comprise an Internet-of-Things (IoT) UE or a Cellular IoT (CIoT) UE, which can comprise a network access layer designed for low-power IoT applications utilizing short-lived UE connections. In some aspects, any of the UEs 101 and 102 can include a narrowband (NB) IoT UE (e.g., such as an enhanced NB-IoT (eNB-IoT) UE and Further Enhanced (FeNB-IoT) UE). An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network includes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

In some aspects, any of the UEs 101 and 102 can include enhanced MTC (eMTC) UEs or further enhanced MTC (FeMTC) UEs.

The UEs 101 and 102 may be configured to connect, e.g., communicatively couple, with a radio access network (RAN) 110. The RAN 110 may be, for example, an Evolved Universal Mobile Telecommunications System (UMTS) Terrestrial Radio Access Network (E-UTRAN), a NextGen RAN (NG RAN), or some other type of RAN. The UEs 101 and 102 utilize connections 103 and 104, respectively, each of which comprises a physical communications interface or layer (discussed in further detail below); in this example, the connections 103 and 104 are illustrated as an air interface to enable communicative coupling and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth-generation (5G) protocol, a New Radio (NR) protocol, and the like.

In an aspect, the UEs 101 and 102 may further directly exchange communication data via a ProSe interface 105. The ProSe interface 105 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 102 is shown to be configured to access an access point (AP) 106 via connection 107. The connection 107 can comprise a local wireless connection, such as, for example, a connection consistent with any IEEE 802.11 protocol, according to which the AP 106 can comprise a wireless fidelity (WiFi®) router. In this example, the AP 106 is shown to be connected to the Internet without connecting to the core network of the wireless system (described in further detail below).

The RAN 110 can include one or more access nodes that enable the connections 103 and 104. These access nodes (ANs) can be referred to as base stations (BSs), NodeBs, evolved NodeBs (eNBs), Next Generation NodeBs (gNBs), RAN nodes, and the like, and can comprise ground stations (e.g., terrestrial access points) or satellite stations providing coverage within a geographic area (e.g., a cell). In some aspects, the communication nodes 111 and 112 can be transmission/reception points (TRPs). In instances when the communication nodes 111 and 112 are NodeBs (e.g., eNBs or gNBs), one or more TRPs can function within the communication cell of the NodeBs. The RAN 110 may include one or more RAN nodes for providing macrocells, e.g., macro RAN node 111, and one or more RAN nodes for providing femtocells or picocells (e.g., cells having smaller coverage areas, smaller user capacity, or higher bandwidth compared to macrocells), e.g., low power (LP) RAN node 112.

Any of the RAN nodes 111 and 112 can terminate the air interface protocol and can be the first point of contact for the UEs 101 and 102. In some aspects, any of the RAN nodes 111 and 112 can fulfill various logical functions for the RAN 110 including, but not limited to, radio network controller (RNC) functions such as radio bearer management, uplink and downlink dynamic radio resource management, and data packet scheduling, and mobility management. In an example, any of the nodes 111 and/or 112 can be a new generation Node-B (gNB), an evolved node-B (eNB), or another type of RAN node.

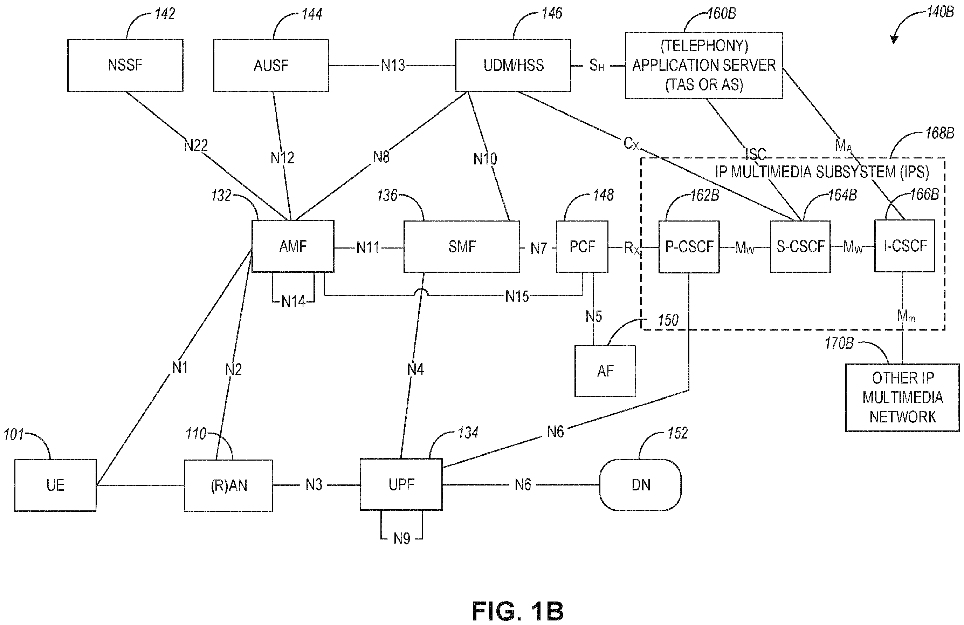

The RAN 110 is shown to be communicatively coupled to a core network (CN) 120 via an S1 interface 113. In aspects, the CN 120 may be an evolved packet core (EPC) network, a NextGen Packet Core (NPC) network, or some other type of CN (e.g., as illustrated in reference to FIGS. 1B-1C). In this aspect, the S1 interface 113 is split into two parts: the S1-U interface 114, which carries traffic data between the RAN nodes 111 and 112 and the serving gateway (S-GW) 122, and the S1-mobility management entity (MME) interface 115, which is a signaling interface between the RAN nodes 111 and 112 and MMEs 121.

In this aspect, the CN 120 comprises the MMEs 121, the S-GW 122, the Packet Data Network (PDN) Gateway (P-GW) 123, and a home subscriber server (HSS) 124. The MMEs 121 may be similar in function to the control plane of legacy Serving General Packet Radio Service (GPRS) Support Nodes (SGSN). The MMEs 121 may manage mobility aspects in access such as gateway selection and tracking area list management. The HSS 124 may comprise a database for network users, including subscription-related information to support the network entities' handling of communication sessions. The CN 120 may comprise one or several HSSs 124, depending on the number of mobile subscribers, on the capacity of the equipment, on the organization of the network, etc. For example, the HSS 124 can provide support for routing/roaming, authentication, authorization, naming/addressing resolution, location dependencies, etc.

The S-GW 122 may terminate the S1 interface 113 towards the RAN 110, and routes data packets between the RAN 110 and the CN 120. In addition, the S-GW 122 may be a local mobility anchor point for inter-RAN node handovers and also may provide an anchor for inter-3GPP mobility. Other responsibilities of the S-GW 122 may include a lawful intercept, charging, and some policy enforcement.

The P-GW 123 may terminate an SGi interface toward a PDN. The P-GW 123 may route data packets between the EPC network 120 and external networks such as a network including the application server 184 (alternatively referred to as application function (AF)) via an Internet Protocol (IP) interface 125. The P-GW 123 can also communicate data to other external networks 131A, which can include the Internet, IP multimedia subsystem (IPS) network, and other networks. Generally, the application server 184 may be an element offering applications that use IP bearer resources with the core network (e.g., UMTS Packet Services (PS) domain, LTE PS data services, etc.). In this aspect, the P-GW 123 is shown to be communicatively coupled to an application server 184 via an IP interface 125. The application server 184 can also be configured to support one or more communication services (e.g., Voice-over-Internet Protocol (VoIP) sessions, PTT sessions, group communication sessions, social networking services, etc.) for the UEs 101 and 102 via the CN 120.

The P-GW 123 may further be a node for policy enforcement and charging data collection. Policy and Charging Rules Function (PCRF) 126 is the policy and charging control element of the CN 120. In a non-roaming scenario, in some aspects, there may be a single PCRF in the Home Public Land Mobile Network (HPLMN) associated with a UE's Internet Protocol Connectivity Access Network (IP-CAN) session. In a roaming scenario with a local breakout of traffic, there may be two PCRFs associated with a UE's IP-CAN session: a Home PCRF (H-PCRF) within an HPLMN and a Visited PCRF (V-PCRF) within a Visited Public Land Mobile Network (VPLMN). The PCRF 126 may be communicatively coupled to the application server 184 via the P-GW 123.

In some aspects, the communication network 140A can be an IoT network or a 5G network, including a 5G new radio network using communications in the licensed (5G NR) and the unlicensed (5G NR-U) spectrum. One of the current enablers of IoT is the narrowband-IoT (NB-IoT).

An NG system architecture can include the RAN 110 and a 5G network core (5GC) 120. The NG-RAN 110 can include a plurality of nodes, such as gNBs and NG-eNBs. The core network 120 (e.g., a 5G core network or 5GC) can include an access and mobility function (AMF) and/or a user plane function (UPF). The AMF and the UPF can be communicatively coupled to the gNBs and the NG-eNBs via NG interfaces. More specifically, in some aspects, the gNBs and the NG-eNBs can be connected to the AMF by NG-C interfaces, and to the UPF by NG-U interfaces. The gNBs and the NG-eNBs can be coupled to each other via Xn interfaces.

In some aspects, the NG system architecture can use reference points between various nodes as provided by 3GPP Technical Specification (TS) 23.501 (e.g., V15.4.0, 2018-12). In some aspects, each of the gNBs and the NG-eNBs can be implemented as a base station, a mobile edge server, a small cell, a home eNB, and so forth. In some aspects, a gNB can be a master node (MN) and NG-eNB can be a secondary node (SN) in a 5G architecture.

FIG. 1B illustrates a non-roaming 5G system architecture in accordance with some aspects. Referring to FIG. 1B, there is illustrated a 5G system architecture 140B in a reference point representation. More specifically, UE 102 can be in communication with RAN 110 as well as one or more other 5G core (5GC) network entities. The 5G system architecture 140B includes a plurality of network functions (NFs), such as access and mobility management function (AMF) 132, session management function (SMF) 136, policy control function (PCF) 148, application function (AF) 150, user plane function (UPF) 134, network slice selection function (NSSF) 142, authentication server function (AUSF) 144, and unified data management (UDM)/home subscriber server (HSS) 146. The UPF 134 can provide a connection to a data network (DN) 152, which can include, for example, operator services, Internet access, or third-party services. The AMF 132 can be used to manage access control and mobility and can also include network slice selection functionality. The SMF 136 can be configured to set up and manage various sessions according to network policy. The UPF 134 can be deployed in one or more configurations according to the desired service type. The PCF 148 can be configured to provide a policy framework using network slicing, mobility management, and roaming (similar to PCRF in a 4G communication system). The UDM can be configured to store subscriber profiles and data (similar to an HSS in a 4G communication system).

In some aspects, the 5G system architecture 140B includes an IP multimedia subsystem (IMS) 168B as well as a plurality of IP multimedia core network subsystem entities, such as call session control functions (CSCFs). More specifically, the IMS 168B includes a CSCF, which can act as a proxy CSCF (P-CSCF) 162BE, a serving CSCF (S-CSCF) 164B, an emergency CSCF (E-CSCF) (not illustrated in FIG. 1B), or interrogating CSCF (I-CSCF) 166B. The P-CSCF 162B can be configured to be the first contact point for the UE 102 within the IM subsystem (IMS) 168B. The S-CSCF 164B can be configured to handle the session states in the network, and the E-CSCF can be configured to handle certain aspects of emergency sessions such as routing an emergency request to the correct emergency center or PSAP. The I-CSCF 166B can be configured to function as the contact point within an operator's network for all IMS connections destined to a subscriber of that network operator, or a roaming subscriber currently located within that network operator's service area. In some aspects, the I-CSCF 166B can be connected to another IP multimedia network 170E, e.g. an IMS operated by a different network operator.

In some aspects, the UDM/HSS 146 can be coupled to an application server 160E, which can include a telephony application server (TAS) or another application server (AS). The AS 160B can be coupled to the IMS 168B via the S-CSCF 164B or the I-CSCF 166B.

A reference point representation shows that interaction can exist between corresponding NF services. For example, FIG. 1B illustrates the following reference points: N1 (between the UE 102 and the AMF 132), N2 (between the RAN 110 and the AMF 132), N3 (between the RAN 110 and the UPF 134), N4 (between the SMF 136 and the UPF 134), N5 (between the PCF 148 and the AF 150, not shown), N6 (between the UPF 134 and the DN 152), N7 (between the SMF 136 and the PCF 148, not shown), N8 (between the UDM 146 and the AMF 132, not shown), N9 (between two UPFs 134, not shown), N10 (between the UDM 146 and the SMF 136, not shown), N11 (between the AMF 132 and the SMF 136, not shown), N12 (between the AUSF 144 and the AMF 132, not shown), N13 (between the AUSF 144 and the UDM 146, not shown), N14 (between two AMFs 132, not shown), N15 (between the PCF 148 and the AMF 132 in case of a non-roaming scenario, or between the PCF 148 and a visited network and AMF 132 in case of a roaming scenario, not shown), N16 (between two SMFs, not shown), and N22 (between AMF 132 and NSSF 142, not shown). Other reference point representations not shown in FIG. 1B can also be used.

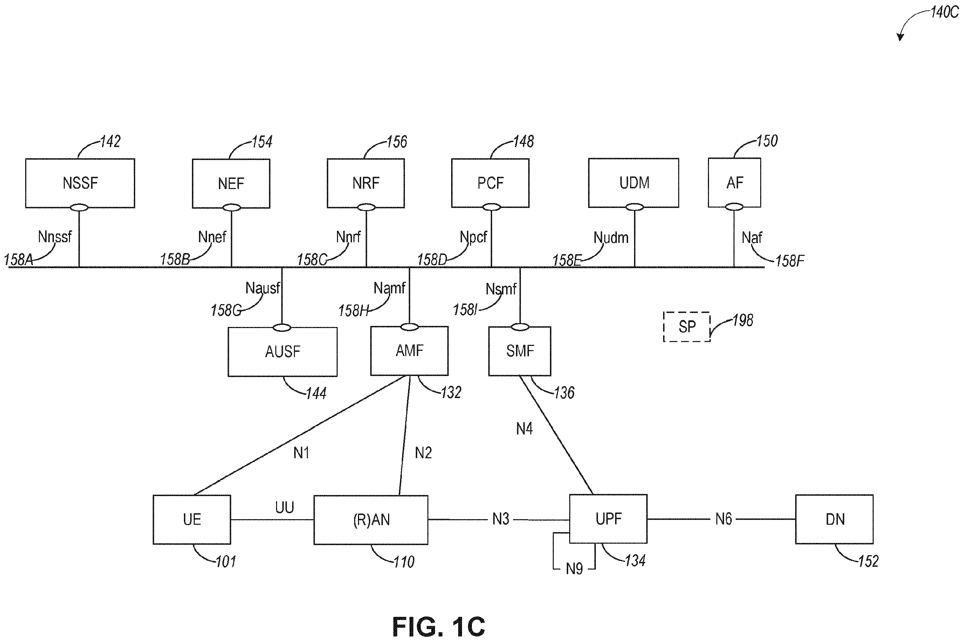

FIG. 1C illustrates a 5G system architecture 140C and a service-based representation. In addition to the network entities illustrated in FIG. 1B, system architecture 140C can also include a network exposure function (NEF) 154 and a network repository function (NRF) 156. In some aspects, 5G system architectures can be service-based and interaction between network functions can be represented by corresponding point-to-point reference points Ni or as service-based interfaces.

In some aspects, as illustrated in FIG. 1C, service-based representations can be used to represent network functions within the control plane that enable other authorized network functions to access their services. In this regard, 5G system architecture 140C can include the following service-based interfaces: Namf 158H (a service-based interface exhibited by the AMF 132), Nsmf 1581 (a service-based interface exhibited by the SMF 136), Nnef 158B (a service-based interface exhibited by the NEF 154), Npcf 158D (a service-based interface exhibited by the PCF 148), a Nudm 158E (a service-based interface exhibited by the UDM 146), Naf 158F (a service-based interface exhibited by the AF 150), Nnrf 158C (a service-based interface exhibited by the NRF 156), Nnssf 158A (a service-based interface exhibited by the NSSF 142), Nausf 158G (a service-based interface exhibited by the AUSF 144). Other service-based interfaces (e.g., Nudr, N5g-eir, and Nudsf) not shown in FIG. 1C can also be used.

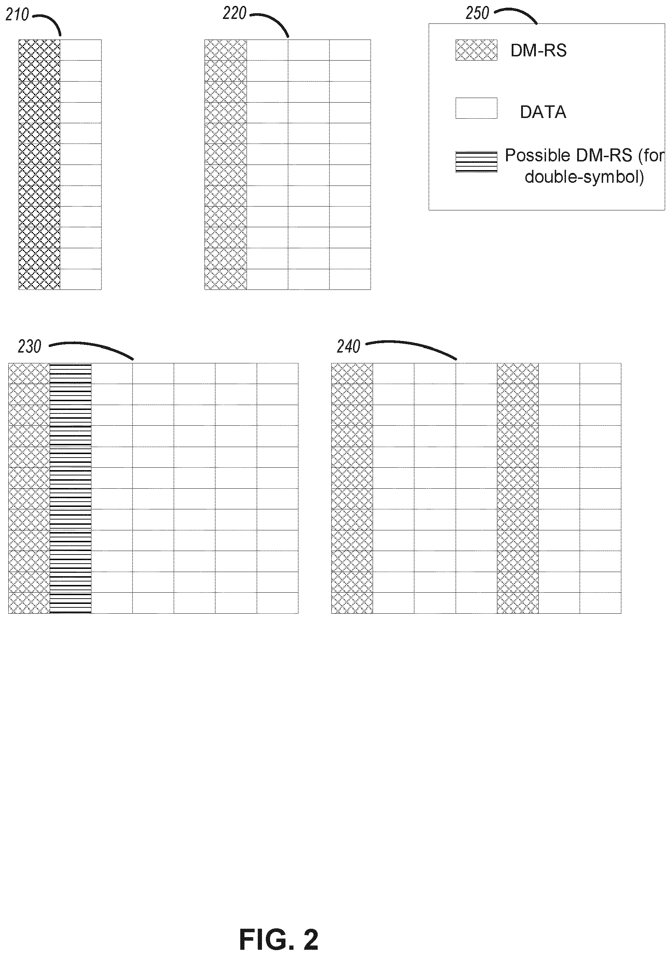

In example embodiments, any of the UEs or base stations discussed in connection with FIG. 1A - FIG. 1C can be configured to operate using the techniques discussed in connection with FIG. 2 - FIG. 7.

One major enhancement for LTE in Rel-13 had been to enable the operation of cellular networks in the unlicensed spectrum, via Licensed-Assisted-Access (LAA). Ever since exploiting the access of the unlicensed spectrum has been considered by 3GPP as one of the promising solutions to cope with the ever-increasing growth of wireless data traffic. One of the important considerations for LTE to operate in an unlicensed spectrum is to ensure fair coexistence with incumbent systems like wireless local area networks (WLANs), which has been the primary focus of Licensed Assisted Access (LAA) standardization effort since Rel. 13.

Following the trend of LTE enhancements, a study on NR-based access to the unlicensed spectrum (NR-unlicensed) started in 3GPP Rel-15. In 3GPP Radio Access Network (RAN) meeting #77, a new study item (SI) on "NR-Based Access to Unlicensed Spectrum" was approved. Within the scope of this SI, one of the primary objectives is to identify additional functionalities that are needed for a physical (PHY) layer design of NR to operate in the unlicensed spectrum. In particular, it may be desirable to minimize the design efforts by identifying enhancements needed for Rel-15 NR design to enable unlicensed operation while avoiding unnecessary divergence from Rel-15 NR licensed framework. Coexistence methods already defined for LTE-based LAA context may be assumed as the baseline for the operation of NR-unlicensed systems, while enhancements over these existing methods are not precluded. In some aspects, NR-based operation in an unlicensed spectrum should not impact deployed Wi-Fi services (e.g., data, video, and voice services) more than an additional Wi-Fi network on the same carrier.

In the legacy 3GPP RANI meetings, there was an agreement that additional durations from 2 to 13 symbols (other than 2, 4, and 7 symbols which are already supported in Rel-15) for the Physical Downlink Shared Channel (PDSCH) mapping of type B may be supported. Aspects described herein are directed to mechanisms to support the durations of PDSCH mapping of type B that are not specified in Rel-15.

### Mechanisms to Determine DM-RS Positions

Aspects described herein are directed to mechanisms to support the durations of PDSCH mapping type B for the NR-unlicensed operation.

In legacy rel-15 NR, the possible lengths for PDSCH mapping type B are 2, 4, and 7 symbols. Therefore, DM-RS positions were only defined for those cases as given below and shown in FIG. 2.

FIG. 2 shows example diagrams 210-240 for DM-RS positions for PDSCH with different lengths with type B mapping as described in Rel-15. Legend 250 illustrates the DM-RS, Data, and Possible DM-RS indicators used in diagrams 210-240. Each of the diagrams 210-240 includes a resource grid with a plurality of symbols shown in the horizontal direction and a plurality of carriers shown in the vertical direction. Each of the boxes in the resource grids shown herein may denote a resource element (RE).

Diagram 210 shows an illustration of a 2-symbol PDSCH with a single-symbol DM-RS. The single-symbol DM-RS is mapped to the first symbol (i.e., symbol 0).

Diagram 220 shows an illustration of a 4-symbol length PDSCH with a single-symbol DM-RS. The single-symbol DM-RS is mapped to the first symbol (i.e., symbol 0).

Diagram 230 shows an illustration of a 7-symbol length PDSCH with a signal-symbol DM-RS mapped to the first symbol (i.e., symbol 0). Furthermore, diagram 230 shows an option for mapping a double-symbol DM-RS according to Rel-15 and is shown by the boxes with diagonal lines and mapped to the second symbol (i.e., symbol 1) in addition to the DM-RS mapped to the first symbol (i.e., symbol 0). The double-symbol DM-RS includes a single instance of continuous DM-RS spanning two consecutive symbols.

Diagram 240 shows a 7-symbol length PDSCH with one additional DM-RS symbol, in addition to the first DM-RS position at the first symbol (i.e., symbol 0), located in the fifth symbol (i.e., symbol 4).

In some aspects, for the single-symbol DM-RS case, DM-RS positions may be determined for each of the alternate PDSCH length durations with symbol lengths. In addition to the standard PDSCH duration with symbol lengths of 2, 4, and 7 symbols, alternate PDSCH symbol length durations with symbol lengths of 3, 5, 6, 8, 9, 10, 11, 12, 13, and 14 symbols (e.g., orthogonal frequency-division multiplexing (OFDM) symbols) and their corresponding DM-RS positions are provided by way of the present disclosure. Furthermore, it is appreciated that the first symbol in each of the following corresponds to position commonly referred to as symbol 0, the second symbol is referred to as symbol 1, and so on.

For a 2 symbol PDSCH length, the DM-RS position may be symbol 0. For a 3 symbol PDSCH length, the DM-RS position may be symbol 0. For a 4 symbol PDSCH length, the DM-RS position may be symbol 0. For a 5 symbol PDSCH length, the DM-RS position may be symbol 0 with a possible (optional) additional DM-RS at symbol 4 (i.e., the fifth symbol). For a 6 symbol PDSCH length, the DM-RS position may be symbol 0 with a possible (optional) additional DM-RS at symbol 4.

For a 7 symbol PDSCH length, the DM-RS position may be symbol 0 with a possible (optional) additional DM-RS at symbol 4. For an 8 symbol PDSCH, the DM-RS position may be symbol 0 with an optional additional DM-RS symbol position at symbol 6 if one additional DM-RS symbol is configured, or, if two additional DM-RS symbols are configured, the additional DM-RS positions may be at symbol 3 (i.e., the fourth symbol) and symbol 6 (i.e., the seventh symbol).

For a 9 symbol PDSCH length, the DM-RS position may be symbol 0 with an optional additional DM-RS symbol position at symbol 6 if one additional DM-RS is configured, or, if two additional DM-RS symbols are configured, the additional DM-RS symbol positions may be at symbol 3 and symbol 6.

For a 10 symbol PDSCH length, the DM-RS position may be at symbol 0, and possibly up to three additional DM-RS symbol positions may optionally be added. If one additional DM-RS symbol is configured, the additional DM-RS symbol position may be at symbol 8 (i.e., the ninth symbol). If two additional DM-RS symbols are configured, the additional DM-RS symbol positions may be at symbol 4 and symbol 8. If three additional DM-RS symbols are configured, the additional DM-RS positions may be at symbol 4, symbol 6, and symbol 9.

For an 11 symbol PDSCH length, the DM-RS position may be symbol 0, and possibly up to three additional DM-RS symbol positions may be optionally added. If one additional DM-RS symbol is configured, the additional DM-RS symbol position may be at symbol 8 (i.e., the ninth symbol). If two additional DM-RS symbols are configured, the additional DM-RS symbol positions may be at symbol 4 and symbol 8. If three additional DM-RS symbols are configured, the additional DM-RS positions may be at symbol 4, symbol 6, and symbol 9.

For a 12 symbol PDSCH length, the DM-RS position may be symbol 0, and possibly up to three additional DM-RS symbol positions may be optionally added. If one additional DM-RS symbol is configured, the additional DM-RS symbol position may be at symbol 10 (i.e., the eleventh symbol). If two additional DM-RS symbols are configured, the additional DM-RS positions may be at symbol 5 and symbol 10. If three additional DM-RS symbols are configured, the additional DM-RS positions may be at symbol 4, symbol 6, and symbol 9.

For a 13 symbol PDSCH length, the DM-RS position may be at symbol 0, and possibly up to three additional DM-RS symbol positions may be optionally included. If one additional DM-RS symbol is configured, the additional DM-RS symbol position may be at symbol 10 (i.e., the eleventh symbol). If two additional DM-RS symbols are configured, the additional DM-RS positions may be at symbol 5 and symbol 10. If three additional DM-RS symbols are configured, the additional DM-RS positions may be at symbol 4, symbol 6, and symbol 9.

For a 14 symbol PDSCH length, the DM-RS position may be at symbol 0, and possibly up to three additional DM-RS symbol positions may be optionally included. If one additional DM-RS symbol is configured, the additional DM-RS symbol position may be at symbol 10 (i.e., the eleventh symbol). If two additional DM-RS symbols are configured, the additional DM-RS positions may be at symbol 5 and symbol 10. If three additional DM-RS symbols are configured, the additional DM-RS positions may be at symbol 4, symbol 6, and symbol 9.

In some aspects, for double-symbol DM-RS scenarios, the starting DM-RS position may be determined for each of a plurality of PDSCH symbol lengths, in addition to the standard 7 symbol PDSCH length. For the double-symbol DM-RS, each instance of the DM-RS is sent over a span of two consecutive DM-RS symbols. An example of a double-symbol DM-RS is shown in Diagram 130 for a 7 symbol PDSCH length with the first two symbols (i.e. symbols 0 and 1) being occupied for DM-RS transmission as illustrated by the DM-RS shaded boxes in addition to the Possible DM-RS (for double-symbol) shaded boxes.

For a 5 symbol PDSCH length, the starting DM-RS position may be symbol 0. For a 6 symbol PDSCH length, the starting DM-RS position may be symbol 0. For a 7 symbol PDSCH length, the starting DM-RS position may be symbol 0.

For an 8 symbol PDSCH length, the starting DM-RS position may be symbol 0. A possible additional DM-RS position for double-symbol DM-RS transmission may be at symbol 5.

For a 9 symbol PDSCH length, the starting DM-RS position may be symbol 0. A possible additional DM-RS position for double-symbol DM-RS transmission may be at symbol 5.

For a 10 symbol PDSCH length, the starting DM-RS position may be symbol 0. A possible additional DM-RS position for double-symbol DM-RS transmission may be at symbol 7.

For an 11 symbol PDSCH length, the starting DM-RS position may be symbol 0. A possible additional DM-RS position for double-symbol DM-RS transmission may be at symbol 7.

For a 12 symbol PDSCH length, the starting DM-RS position may be symbol 0. A possible additional DM-RS position for double-symbol DM-RS transmission may be at symbol 9.

For a 13 symbol PDSCH length, the starting DM-RS position may be symbol 0. A possible additional DM-RS position for double-symbol DM-RS transmission may be at symbol 9.

For a 14 symbol PDSCH length, the starting DM-RS position may be symbol 0. A possible additional DM-RS position for double-symbol DM-RS transmission may be at symbol 9.

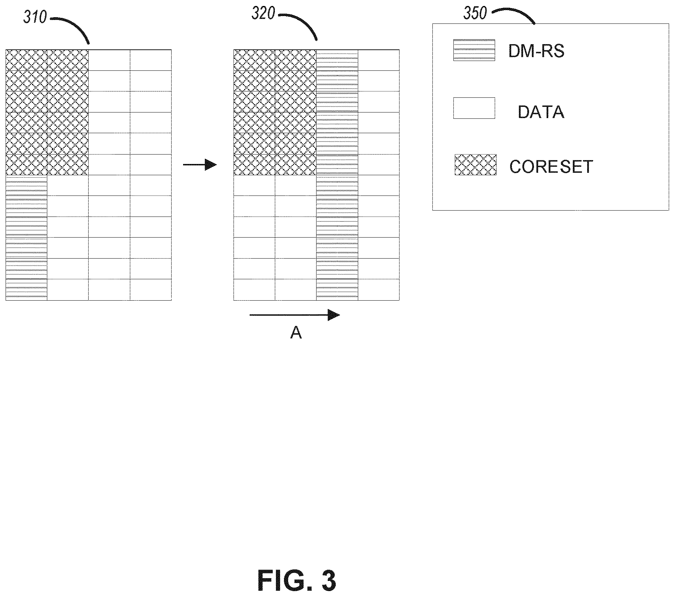

FIG. 3 shows an example diagram for DM-RS symbol position shifting, in accordance with some embodiments. More specifically, FIG. 3 shows an illustration of shifting the positioning of a DM-RS in response to identifying a Control Resource Set (CORESET) occupying a front portion of a PDSCH symbol duration to avoid collisions between the DM-RS and the CORESET. Legend 350 provides the coloring/shading information used in FIG. 3.

Diagram 310 shows a collision between the DM-RS symbol position and the CORESET. To avoid this scenario, diagram 310 may be modified by shifting the DM-RS symbol positions by "A" symbols to obtain diagram 320. The front-loaded DM-RS is, in other words, shifted to the first symbol position after the CORESET as shown.

In some aspects, the UE may be further configured as follows.

For a 2 symbol PDSCH length, the UE may be configured to not expect a front-loaded DM-RS beyond the second symbol.

For a 3 symbol PDSCH length, the UE may be configured to not expect a front-loaded DM-RS beyond a third symbol.

For a 4 symbol PDSCH length, the UE may be configured to not expect front-loaded DM-RS beyond a third symbol.

For a 5 symbol PDSCH length, the UE may be configured to not expect a front-loaded DM-RS beyond a third symbol.

For a 6 symbol PDSCH length, the UE may not expect a front-loaded DM-RS beyond a fourth symbol.

For a 7 symbol PDSCH length (or for a 6 symbol PDSCH for an Extended Cyclic Prefix (CP)), the UE may be configured to not expect front-loaded DM-RS beyond a fourth symbol. If one additional DM-RS is configured, the UE may be configured to expect the additional DM-RS to be transmitted in the fifth or sixth symbol when the front-loaded DM-RS symbol is in the first or second symbol, respectively, of the PDSCH duration. Otherwise, the UE may be configured to drop the DM-RS.

For PDSCH durations with lengths over 7 symbols (or larger than 6 symbols for Extended CP), the UE may be configured to not expect front-loaded DM-RS beyond a fourth symbol. If additional DM-RS are configured, the additional DM-RS symbols may be shifted by the same number of symbols shifted for front-loaded DM-RS. If the last DM-RS symbols are positioned outside of PDSCH length or overlapped with the last symbol of PDSCH, then they may be dropped.

In some embodiments, DM-RS positions for type B mapping PDSCH lengths less than 4 symbols can be defined as shown in Table 1 below. In the Tables below, *l*_{d} is the number of symbols in PDSCH, *l*₀ is 0 for PDSCH mapping type B, and dmrs-AdditionalPosition is RRC signaling for configuring DM-RS positions. More specifically, dmrs-AdditionalPosition may specify a first DM-RS position (e.g., *l*₀) and up to three additional DM-RS positions within a PDSCH transmission.

**Table 1 - DM-RS position for length <4**

| *l*_{d} in symbols | Proposed PDSCH mapping type B | | | |
|---|---|---|---|---|
| | *dmrs-AdditionalPosition* | | | |
| | *0* | *1* | *2* | *3* |
| <4 | *l*₀ | *l*₀ | *l*₀ | *l*₀ |

In another embodiment, DM-RS positions for type B mapping PDSCH lengths of length 5 and 6 symbols can be defined as shown in Table 2.

**Table 2 - DM-RS position for length 5/6**

| *l*_{d} in symbols | Proposed PDSCH mapping type B | | | |
|---|---|---|---|---|
| | *dmrs-AdditionalPosition* | | | |
| | *0* | *1* | *2* | *3* |
| 5 | *l*₀ | *l*₀, 4 | *l*₀, 4 | *l*₀, 4 |
| 6 | *l*₀ | *l*₀, 4 | *l*₀, 4 | *l*₀, 4 |

In another embodiment, DM-RS positions for type B mapping PDSCH lengths of length 8 symbols can be defined as shown in either Table 2 3 or Table 4.

**Table 3 - DM-RS position for length 8 - A**

| *l*_{d} in symbols | Proposed PDSCH mapping type B | | | |
|---|---|---|---|---|
| | *dmrs-AdditionalPosition* | | | |
| | *0* | *1* | *2* | *3* |
| 8 | *l*₀ | *l*₀, 6 | *l*₀, 3, 6 | *l*₀, 3, 6 |

**Table 4 - DM-RS position for length 8 - B**

| *l*_{d} in symbols | Proposed PDSCH mapping type B | | | |
|---|---|---|---|---|
| | *dmrs-AdditionalPosition* | | | |
| | *0* | *1* | *2* | *3* |
| 8 | *l*₀ | *l*₀, 7 | *l*₀, 4, 7 | *l*₀, 4, 7 |

In another embodiment, DM-RS positions for type B mapping PDSCH lengths of length 9 and 10 symbols can be defined as shown in Table 5Table 2.

**Table 5 - DM-RS position for length 9/10**

| *l*_{d} in symbols | Proposed PDSCH mapping type B | | | |
|---|---|---|---|---|
| | *dmrs-AdditionalPosition* | | | |
| | *0* | *1* | *2* | *3* |
| 9 | *l*₀ | *l*₀, 7 | *l*₀, 4, 7 | *l*₀, 4, 7 |
| 10 | *l*₀ | *l*₀, 7 | *l*₀, 4, 7 | *l*₀, 4, 7 |

In another embodiment, DM-RS positions for type B mapping PDSCH lengths of length 11 symbols can be defined as shown in either of Table 6-8Table 2.

**Table 6 - DM-RS position for length 11 - A**

| *l*_{d} in symbols | Proposed PDSCH mapping type B | | | |
|---|---|---|---|---|
| | *dmrs-AdditionalPosition* | | | |
| | *0* | *1* | *2* | *3* |
| 11 | *l*₀ | *l*₀, 7 | *l*₀, 4, 7 | *l*₀, 4, 7 |

**Table 7 - DM-RS position for length 11 - B**

| *l*_{d} in symbols | Proposed PDSCH mapping type B | | | |
|---|---|---|---|---|
| | *dmrs-AdditionalPosition* | | | |
| | *0* | *1* | *2* | *3* |
| 11 | *l*₀ | *l*₀, 7 | *l*₀, 4, 7 | *l*₀, 4, 7, 10 |

**Table 8 - DM-RS position for length 11 - C**

| *l*_{d} in symbols | Proposed PDSCH mapping type B | | | |
|---|---|---|---|---|
| | *dmrs-AdditionalPosition* | | | |
| | *0* | *1* | *2* | *3* |
| 11 | *l*₀ | *l*₀, 7 | *l*₀, 4, 7 | *l*₀, 3, 6, 9 |

In another embodiment, DM-RS positions for type B mapping PDSCH lengths of length 12 symbols can be defined as shown in either of Table 9-11 Table 2.

**Table 9 - DM-RS position for length 12 - A**

| *l*_{d} in symbols | Proposed PDSCH mapping type B | | | |
|---|---|---|---|---|
| | *dmrs-AdditionalPosition* | | | |
| | *0* | *1* | *2* | *3* |
| 12 | *l*₀ | *l*₀, 10 | *l*₀, 5, 10 | *l*₀, 3, 6, 9 |

**Table 10 - DM-RS position for length 12 - B**

| *l*_{d} in symbols | Proposed PDSCH mapping type B | | | |
|---|---|---|---|---|
| | *dmrs-AdditionalPosition* | | | |
| | *0* | *1* | *2* | *3* |
| 12 | *l*₀ | *l*₀, 7 | *l*₀, 4, 7 | *l*₀, 4, 7, 10 |

**Table 11 - DM-RS position for length 12 - C**

| *l*_{d} in symbols | Proposed PDSCH mapping type B | | | |
|---|---|---|---|---|
| | *dmrs-AdditionalPosition* | | | |
| | *0* | *1* | *2* | *3* |
| 11 | *l*₀ | *l*₀, 7 | *l*₀, 4, 7 | *l*₀, 3, 6, 9 |

In another embodiment, DM-RS positions for type B mapping PDSCH lengths of length 13 symbols can be defined as shown in either of Table 12-14Table 2.

**Table 12 - DM-RS position for length 13 - A**

| *l*_{d} in symbols | Proposed PDSCH mapping type B | | | |
|---|---|---|---|---|
| | *dmrs-AdditionalPosition* | | | |
| | *0* | *1* | *2* | *3* |
| 13 | *l*₀ | *l*₀, 10 | *l*₀, 5, 10 | *l*₀, 3, 6, 9 |

**Table 13 - DM-RS position for length 13 - B**

| *l*_{d} in symbols | Proposed PDSCH mapping type B | | | |
|---|---|---|---|---|
| | *dmrs-AdditionalPosition* | | | |
| | *0* | *1* | *2* | *3* |
| 13 | *l*₀ | *l*₀, 7 | *l*₀, 4, 7 | *l*₀, 4, 7, 10 |

**Table 14 - DM-RS position for length 13 - C**

| *l*_{d} in symbols | Proposed PDSCH mapping type B | | | |
|---|---|---|---|---|
| | *dmrs-AdditionalPosition* | | | |
| | *0* | *1* | *2* | *3* |
| 13 | *l*₀ | *l*₀, 7 | *l*₀, 4, 7 | *l*₀, 3, 6, 9 |

In another embodiment, DM-RS positions for type B mapping PDSCH lengths of length 14 symbols can be defined as shown in either of Table 15-17Table 2.

**Table 15 - DM-RS position for length 14 - A**

| *l*_{d} in symbols | Proposed PDSCH mapping type B | | | |
|---|---|---|---|---|
| | *dmrs-AdditionalPosition* | | | |
| | *0* | *1* | *2* | *3* |
| 14 | *l*₀ | *l*₀, 10 | *l*₀, 5, 10 | *l*₀, 3, 6, 9 |

**Table 16 - DM-RS position for length 14 - B**

| *l*_{d} in symbols | Proposed PDSCH mapping type B | | | |
|---|---|---|---|---|
| | *dmrs-AdditionalPosition* | | | |
| | *0* | *1* | *2* | *3* |
| 14 | *l*₀ | *l*₀, 7 | *l*₀, 4, 7 | *l*₀, 4, 7, 10 |

**Table 17 - DM-RS position for length 14 - C**

| *l*_{d} in symbols | Proposed PDSCH mapping type B | | | |
|---|---|---|---|---|
| | *dmrs-AdditionalPosition* | | | |
| | *0* | *1* | *2* | *3* |
| 14 | *l*₀ | *l*₀, 7 | *l*₀, 4, 7 | *l*₀, 3, 6, 9 |

### Mechanisms to Determine UE Processing

In some aspects, for PDSCH mapping type B, depending on the number of PDSCH symbols, the UE processing time margin (d_{1,1}) can be defined as provided herein. The time margin d_{1,1} may be used for determining the Physical Uplink Control Channel (PUCCH) timing for the transmission of Hybrid Automatic Repeat Request (HARQ) Acknowledgement (ACK) information corresponding to the PDSCH.

For a UE with a processing capability 1 (denoting a UE with a more conservative PDSCH processing approach), for a PDSCH with the mapping of type B, the time margin d_{1,1} may be determined as follows:
If the number of PDSCH symbols allocated is 7, then d_{1,1} = 0;
If the number of PDSCH symbols allocated is 4, then d_{1,1} = 3; and
If the number of PDSCH symbols allocated is 2, then d_{1,1} = 3+d, where d is the number of overlapping symbols of the scheduling PDCCH and the scheduled PDSCH.

For a UE with a processing capability 2 (denoting a UE with a faster PDSCH processing time as compared to a UE with a processing capability 1), for a PDSCH with the mapping of type B, the time margin d_{1,1} may be determined as follows:
If the number of PDSCH symbols allocated is 7, then d_{1,1} = 0;
If the number of PDSCH symbols allocated is 4, then d_{1,1} is the number of overlapping symbols of the scheduling PDCCH and the scheduled PDSCH;
If the number of PDSCH symbols allocated is 2;
If the scheduling PDCCH was in a 3-symbol CORESET and the CORESET and the PDSCH had the same starting symbol, then d_{1,1} = 3; and
otherwise, d_{1,1} is the number of overlapping symbols of the scheduling PDCCH and the scheduled PDSCH.

Aspects described herein are directed to providing a time margin for the PDSCH mapping type B with 3/5/6/8/9/10/11/12/13/14 symbol lengths as provided herein.

For a UE with processing capability 1 (i.e., slower PDSCH processing) and for PDSCH mapping type B, the time margin d_{1,1} may be determined as follows:
If the number of PDSCH symbols allocated is >= 7, then d_{1,1} = 0;
If the number of PDSCH symbols allocated is 4 or 5 or 6, then d_{1,1} = 3, 2 or 1, respectively; and
If the number of PDSCH symbols allocated is 3, there are multiple options:
   Option 1: d_{1,1} = 4;
   Option 2: d_{1,1} = 2+min(d,2), where d is the number of overlapping symbols of the scheduling PDCCH and the scheduled PDSCH;
   Option 3: d_{1,1} = 3+min(d,1), where d is the number of overlapping symbols of the scheduling PDCCH and the scheduled PDSCH;
   Option 4: d_{1,1} = 3+min(max(d-1,0),1), where d is the number of overlapping symbols of the scheduling PDCCH and the scheduled PDSCH; and
   Option 5: d_{1,1} = 3+d, where d is the number of overlapping symbols of the scheduling PDCCH and the scheduled PDSCH.

For these aspects, min(a, b) corresponds to the smallest value between a and b, and max(a, b) corresponds to the largest value between a and b.

If the number of PDSCH symbols allocated is 2, then d_{1,1} = 3+d, where d is the number of overlapping symbols of the scheduling PDCCH and the scheduled PDSCH.

In some aspects, for a UE with a processing capability 2 (i.e., faster PDSCH processing) and PDSCH mapping type B, the time margin d_{1,1} may be determined as follows:
If the number of PDSCH symbols allocated is >= 7, then d_{1,1} = 0; and
If the number of PDSCH symbols allocated is 5 or 6, there are multiple options:
   Option 1: d_{1,1} = 2 or 1, respectively; and
   Option 2: d_{1,1} = min(d,2) or min(d,1), respectively, where d is the number of overlapping symbols of the scheduling PDCCH and the scheduled PDSCH. For this aspect, min(a, b) corresponds to the smallest value between a and b.

If the number of PDSCH symbols allocated is 4 or 3, then d_{1,1} is the number of overlapping symbols of the scheduling PDCCH and the scheduled PDSCH;

If the number of PDSCH symbols allocated is 2, if the scheduling PDCCH was in a 3-symbol CORESET and the CORESET and the PDSCH had the same starting symbol, then d_{1,1} = 3; otherwise, d_{1,1} is the number of overlapping symbols of the scheduling PDCCH and the scheduled PDSCH.

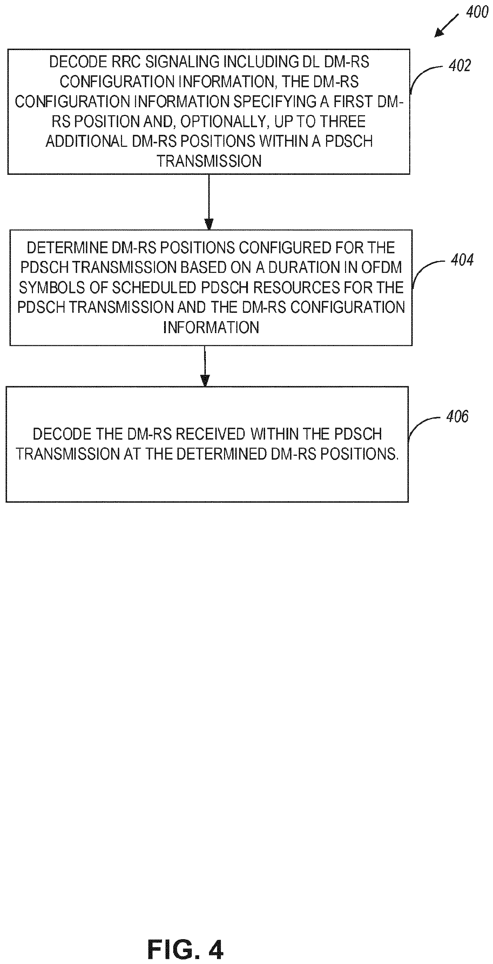

FIG. 4 - FIG. 6 show exemplary process flowcharts, in accordance with some embodiments.

FIG. 4 shows an example process 400 for a network device such as a UE to implement aspects of this disclosure. Process 400 may include features 402-406 and may optionally further include other features of the present disclosure.

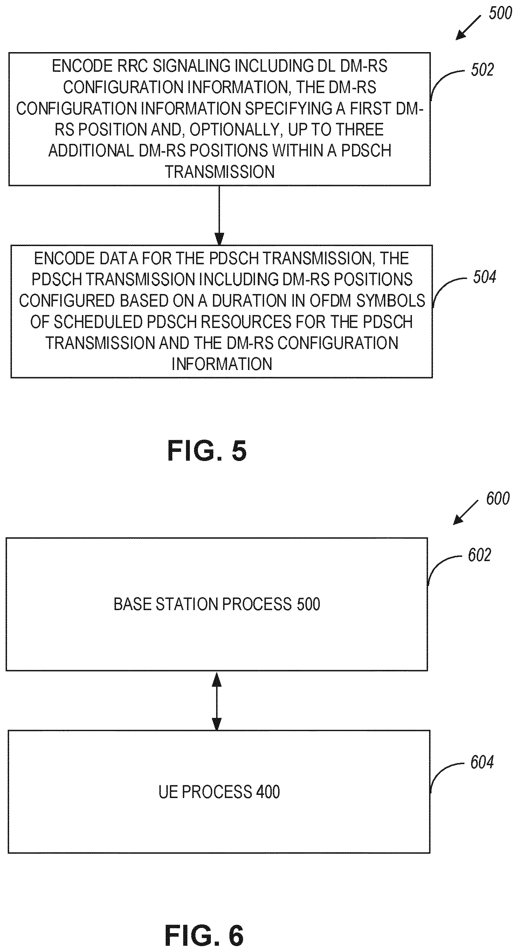

FIG. 5 shows an example process 500 for a base station (e.g., a gNB) to implements aspects of this disclosure. Process 500 may include features 502-504 and may optionally further include other features of the present disclosure.

FIG. 6 shows an example process 600 for a 5G or NR system including a base station implementing process 500 working in combination with a UE implementing process 400 as described herein. Process 600 may optionally further include other features of the present disclosure.

In some embodiments, a system and method of wireless communication for a fifth-generation (5G) or new radio (NR) system includes transmitting downlink demodulation reference signal (DM-RS) by a base station, wherein the DM-RS positions are determined based on the number of OFDM symbols of a PDSCH using type B mapping. In some embodiments, one DM-RS position is allowed if the single-symbol DM-RS is used and the number of OFDM symbols of a PDSCH is less than or equal to 4. In some embodiments, up to two DM-RS positions are allowed if the single-symbol DM-RS is used and the number of OFDM symbols of a PDSCH is 5, 6, or 7. In some embodiments, up to three DM-RS positions are allowed if the single-symbol DM-RS is used and the number of OFDM symbols of a PDSCH is 8 or 9. In some embodiments, up to four DM-RS positions are allowed if the single-symbol DM-RS is used and the number of OFDM symbols of a PDSCH is greater than or equal to 10. In some embodiments, one DM-RS position is allowed if the double-double -symbol DM-RS is used and the number of OFDM symbols of a PDSCH is less than or equal to 7. In some embodiments, up to two DM-RS positions are allowed if the double-symbol DM-RS is used and the number of OFDM symbols of a PDSCH is greater than or equal to 8.

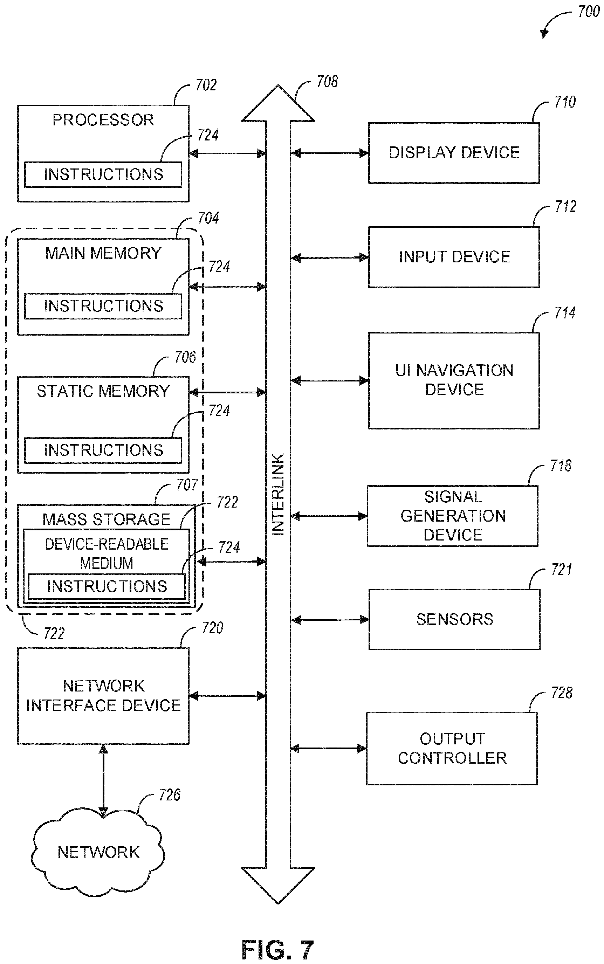

FIG. 7 illustrates a block diagram of a communication device such as an evolved Node-B (eNB), a next generation Node-B (gNB), an access point (AP), a wireless station (STA), a mobile station (MS), or a user equipment (UE), in accordance with some aspects and to perform one or more of the techniques disclosed herein. In alternative aspects, the communication device 700 may operate as a standalone device or may be connected (e.g., networked) to other communication devices.

Circuitry (e.g., processing circuitry) is a collection of circuits implemented in tangible entities of the device 700 that include hardware (e.g., simple circuits, gates, logic, etc.). Circuitry membership may be flexible over time. Circuitries include members that may, alone or in combination, perform specified operations when operating. In an example, the hardware of the circuitry may be immutably designed to carry out a specific operation (e.g., hardwired). In an example, the hardware of the circuitry may include variably connected physical components (e.g., execution units, transistors, simple circuits, etc.) including a machine-readable medium physically modified (e.g., magnetically, electrically, moveable placement of invariant massed particles, etc.) to encode instructions of the specific operation.

In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine-readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the device 700 follow.

In some aspects, the device 700 may operate as a standalone device or may be connected (e.g., networked) to other devices. In a networked deployment, the communication device 700 may operate in the capacity of a server communication device, a client communication device, or both in server-client network environments. In an example, the communication device 700 may act as a peer communication device in a peer-to-peer (P2P) (or other distributed) network environment. The communication device 700 may be a UE, eNB, PC, a tablet PC, an STB, a PDA, a mobile telephone, a smartphone, a web appliance, a network router, switch or bridge, or any communication device capable of executing instructions (sequential or otherwise) that specify actions to be taken by that communication device. Further, while only a single communication device is illustrated, the term "communication device" shall also be taken to include any collection of communication devices that individually or jointly execute a set (or multiple sets) of instructions to perform any one or more of the methodologies discussed herein, such as cloud computing, software as a service (SaaS), and other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client, or server computer system) or one or more hardware processors may be configured by firmware or software (e.g., instructions, an application portion, or an application) as a module that operates to perform specified operations. In an example, the software may reside on a communication device-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using the software, the general-purpose hardware processor may be configured as respective different modules at different times. The software may accordingly configure a hardware processor, for example, to constitute a particular module at one instance of time and to constitute a different module at a different instance of time.

The communication device (e.g., UE) 700 may include a hardware processor 702 (e.g., a central processing unit (CPU), a graphics processing unit (GPU), a hardware processor core, or any combination thereof), a main memory 704, a static memory 706, and mass storage 707 (e.g., hard drive, tape drive, flash storage, or other block or storage devices), some or all of which may communicate with each other via an interlink (e.g., bus) 708.

The communication device 700 may further include a display device 710, an alphanumeric input device 712 (e.g., a keyboard), and a user interface (UI) navigation device 714 (e.g., a mouse). In an example, the display device 710, input device 712, and UI navigation device 714 may be a touchscreen display. The communication device 700 may additionally include a signal generation device 718 (e.g., a speaker), a network interface device 720, and one or more sensors 721, such as a global positioning system (GPS) sensor, compass, accelerometer, or another sensor. The communication device 700 may include an output controller 728, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 707 may include a communication device-readable medium 722, on which is stored one or more sets of data structures or instructions 724 (e.g., software) embodying or utilized by any one or more of the techniques or functions described herein. In some aspects, registers of the processor 702, the main memory 704, the static memory 706, and/or the mass storage 707 may be, or include (completely or at least partially), the device-readable medium 722, on which is stored the one or more sets of data structures or instructions 724, embodying or utilized by any one or more of the techniques or functions described herein. In an example, one or any combination of the hardware processor 702, the main memory 704, the static memory 706, or the mass storage 716 may constitute the device-readable medium 722.

As used herein, the term "device-readable medium" is interchangeable with "computer-readable medium" or "machine-readable medium". While the communication device-readable medium 722 is illustrated as a single medium, the term "communication device-readable medium" may include a single medium or multiple media (e.g., a centralized or distributed database, and/or associated caches and servers) configured to store the one or more instructions 724. The term "communication device-readable medium" is inclusive of the terms "machine-readable medium" or "computer-readable medium", and may include any medium that is capable of storing, encoding, or carrying instructions (e.g., instructions 724) for execution by the communication device 700 and that cause the communication device 700 to perform any one or more of the techniques of the present disclosure, or that is capable of storing, encoding or carrying data structures used by or associated with such instructions. Non-limiting communication device-readable medium examples may include solid-state memories and optical and magnetic media. Specific examples of communication device-readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, communication device-readable media may include non-transitory communication device-readable media. In some examples, communication device-readable media may include communication device-readable media that is not a transitory propagating signal.

The instructions 724 may further be transmitted or received over a communications network 726 using a transmission medium via the network interface device 720 utilizing any one of a number of transfer protocols. In an example, the network interface device 720 may include one or more physical jacks (e.g., Ethernet, coaxial, or phone jacks) or one or more antennas to connect to the communications network 726. In an example, the network interface device 720 may include a plurality of antennas to wirelessly communicate using at least one of single-input-multiple-output (SIMO), MIMO, or multiple-input-single-output (MISO) techniques. In some examples, the network interface device 720 may wirelessly communicate using Multiple User MIMO techniques.

The term "transmission medium" shall be taken to include any intangible medium that is capable of storing, encoding, or carrying instructions for execution by the communication device 700, and includes digital or analog communications signals or another intangible medium to facilitate communication of such software. In this regard, a transmission medium in the context of this disclosure is a device-readable medium.

Example aspects associated with the disclosed techniques include the following Examples 1-19.

Example 1 is an apparatus to be used in a user equipment (UE), the apparatus comprising: processing circuitry, wherein to configure the UE for receiving a physical downlink shared channel (PDSCH) transmission in a 5G-New Radio (NR) communication network, the processing circuitry is to: decode radio resource control (RRC) signaling including downlink (DL) demodulation reference signal (DM-RS) configuration information, the DM-RS configuration information specifying a first DM-RS position and up to three additional DM-RS positions within a PDSCH transmission; determine DM-RS positions configured for the PDSCH transmission based on a duration in Orthogonal Frequency Division Multiplexing (OFDM) symbols of scheduled PDSCH resources for the PDSCH transmission and the DM-RS configuration information, wherein when the PDSCH transmission is configured in accordance with PDSCH mapping type B and a number of the OFDM symbols is configurable to be greater than 7, and wherein when the duration of the scheduled PDSCH resources is 8 OFDM symbols, the DM-RS positions associated with the PDSCH transmission include only symbols 0, 3, and 6; and decode the DM-RS received within the PDSCH transmission at the determined DM-RS positions; and a memory coupled to the processing circuitry and configured to store the RRC signaling.

In Example 2, the subject matter of Example 1 includes, wherein the DM-RS is front-loaded, and the processing circuitry is to: upon detecting a collision between the front-loaded DM-RS and resources reserved for a control resource set (CORESET), shift a first symbol of the front-loaded DM-RS to a symbol immediately after the CORESET.

In Example 3, the subject matter of Example 2 includes, OFDM symbols, the processing circuitry receives the front-loaded DM-RS prior to a fourth symbol of the scheduled PDSCH resources.

In Example 4, the subject matter of Examples 1-3 includes, when the duration of the scheduled PDSCH resources is 9 OFDM symbols, the DM-RS positions associated with the PDSCH transmission include only symbols 0, 5, and 7.

In Example 5, the subject matter of Examples 1-4 includes, when the duration of the scheduled PDSCH resources is 10 OFDM symbols, the DM-RS positions associated with the PDSCH transmission include only symbols 0, 4, and 7.

In Example 6, the subject matter of Examples 1-5 includes, when the duration of the scheduled PDSCH resources is 11 OFDM symbols, the DM-RS positions associated with the PDSCH transmission include only symbols 0, 3, 6, and 9.

In Example 7, the subject matter of Examples 1-6 includes, wherein when the duration of the scheduled PDSCH resources is 12 OFDM symbols, the DM-RS positions associated with the PDSCH transmission include only symbols 0, 3, 6, and 9.

In Example 8, the subject matter of Examples 1-7 includes, wherein when the duration of the scheduled PDSCH resources is 13 OFDM symbols, the DM-RS positions associated with the PDSCH transmission include only symbols 0, 3, 6, and 9.

In Example 9, the subject matter of Examples 1-8 includes, transceiver circuitry coupled to the processing circuitry; and, one or more antennas coupled to the transceiver circuitry.

Example 10 is a non-transitory computer-readable storage medium that stores instructions for execution by one or more processors of a user equipment (UE), the instructions to configure the UE for receiving a physical downlink shared channel (PDSCH) transmission in a 5G-New Radio (NR) communication network, and to cause the UE to: decode radio resource control (RRC) signaling including downlink (DL) demodulation reference signal (DM-RS) configuration information, the DM-RS configuration information specifying a first DM-RS position and up to three additional DM-RS positions within a PDSCH transmission; determine DM-RS positions configured for the PDSCH transmission based on a duration in Orthogonal Frequency Division Multiplexing (OFDM) symbols of scheduled PDSCH resources for the PDSCH transmission and the DM-RS configuration information, wherein when the PDSCH transmission is configured in accordance with PDSCH mapping type B and a number of the OFDM symbols is configurable to be greater than 7, and wherein when the duration of the scheduled PDSCH resources is 8 OFDM symbols, the DM-RS positions associated with the PDSCH transmission include only symbols 0, 3, and 6; and decode the DM-RS received within the PDSCH transmission at the determined DM-RS positions.

In Example 11, the subject matter of Example 10 includes, wherein the DM-RS is front-loaded, and the instructions further cause the UE to: upon detecting a collision between the front-loaded DM-RS and resources reserved for a control resource set (CORESET), shift a first symbol of the front-loaded DM-RS to a symbol immediately after the CORESET.

In Example 12, the subject matter of Example 11 includes, OFDM symbols, the one or more processors receive the front-loaded DM-RS prior to a fourth symbol of the scheduled PDSCH resources.

In Example 13, the subject matter of Examples 10-12 includes, wherein when the duration of the scheduled PDSCH resources is 9 OFDM symbols, the DM-RS positions associated with the PDSCH transmission include only symbols 0, 5, and 7.

In Example 14, the subject matter of Examples 10-13 includes, wherein when the duration of the scheduled PDSCH resources is 10 OFDM symbols, the DM-RS positions associated with the PDSCH transmission include only symbols 0, 4, and 7.

Example 15 is a non-transitory computer-readable storage medium that stores instructions for execution by one or more processors of a Next Generation Node-B (gNB), the instructions to configure the gNB for communicating a physical downlink shared channel (PDSCH) transmission in a 5G-New Radio (NR) communication network, and to cause the gNB to: encode radio resource control (RRC) signaling including downlink (DL) demodulation reference signal (DM-RS) configuration information, the DM-RS configuration information specifying a first DM-RS position and up to three additional DM-RS positions within a PDSCH transmission; and encode data for the PDSCH transmission, the PDSCH transmission including DM-RS positions configured based on a duration in Orthogonal Frequency Division Multiplexing (OFDM) symbols of scheduled PDSCH resources for the PDSCH transmission and the DM-RS configuration information, wherein when the PDSCH transmission is configured in accordance with PDSCH mapping type B and a number of the OFDM symbols is configurable to be greater than 7, and wherein when the duration of the scheduled PDSCH resources is 8 OFDM symbols, the DM-RS positions associated with the PDSCH transmission include only symbols 0, 3, and 6.

Example 16 is at least one machine-readable medium including instructions that, when executed by processing circuitry, cause the processing circuitry to perform operations to implement of any of Examples 1-15.

Example 17 is an apparatus comprising means to implement of any of Examples 1-15.

Example 18 is a system to implement of any of Examples 1-15.

Example 19 is a method to implement of any of Examples 1-15.

As used herein, the term "include only symbols a, b, and c" indicates that any combination of only symbols a, b, and c may be used. For example, the following combinations of symbols are possible and may be used: only symbol a and no other symbol, only symbol b and no other symbol, only symbol c and no other symbol, only symbols a and b and no other symbols, only symbols a and c and no other symbols, only symbols b and c and no other symbols, and only symbols a, b, and c and no other symbols.

Although an aspect has been described with reference to specific exemplary aspects, it will be evident that various modifications and changes may be made to these aspects without departing from the broader scope of the present disclosure. Accordingly, the specification and drawings are to be regarded in an illustrative rather than a restrictive sense. This Detailed Description, therefore, is not to be taken in a limiting sense, and the scope of various aspects is defined only by the appended claims.

## Claims

1. An apparatus to be used in a user equipment, UE, the apparatus comprising:
processing circuitry, wherein to configure the UE for receiving a physical downlink shared channel, PDSCH, transmission in a 5G-New Radio, NR, communication network, the processing circuitry is to:
decode radio resource control, RRC, signaling including downlink, DL, demodulation reference signal, DM-RS, configuration information, the DM-RS configuration information specifying a first DM-RS position and up to three additional DM-RS positions within a PDSCH transmission;
determine DM-RS positions configured for the PDSCH transmission based on a duration in Orthogonal Frequency Division Multiplexing, OFDM, symbols of scheduled PDSCH resources for the PDSCH transmission and the DM-RS configuration information,
wherein when the PDSCH transmission is configured in accordance with PDSCH mapping type B and a number of the OFDM symbols is configurable to be greater than 7, and wherein when the duration of the scheduled PDSCH resources is 8 OFDM symbols, the DM-RS positions associated with the PDSCH transmission include only symbols 0, 3, and 6; and
decode the DM-RS received within the PDSCH transmission at the determined DM-RS positions; and
a memory coupled to the processing circuitry and configured to store the RRC signaling.

2. The apparatus of claim 1, wherein the DM-RS is a front-loaded DM-RS, and the processing circuitry is to:
upon detecting a collision between the front-loaded DM-RS and resources reserved for a control resource set, CORESET, shift a first symbol of the front-loaded DM-RS to a symbol immediately after the CORESET.

3. The apparatus of claim 2, wherein when the duration of the scheduled PDSCH resources is 7 OFDM symbols, the processing circuitry receives the front-loaded DM-RS prior to a fourth symbol of the scheduled PDSCH resources.

4. The apparatus of any one of claims 1 to 3, wherein when the duration of the scheduled PDSCH resources is 9 OFDM symbols, the DM-RS positions associated with the PDSCH transmission include only symbols 0, 5, and 7.

5. The apparatus of any one of claims 1 to 4, wherein when the duration of the scheduled PDSCH resources is 10 OFDM symbols, the DM-RS positions associated with the PDSCH transmission include only symbols 0, 4, and 7.

6. The apparatus of any one of claims 1 to 5, wherein when the duration of the scheduled PDSCH resources is 11 OFDM symbols, the DM-RS positions associated with the PDSCH transmission include only symbols 0, 3, 6, and 9.

7. The apparatus of any one of claims 1 to 6, wherein when the duration of the scheduled PDSCH resources is 12 OFDM symbols, the DM-RS positions associated with the PDSCH transmission include only symbols 0, 3, 6, and 9.

8. The apparatus of any one of claims 1 to 7, wherein when the duration of the scheduled PDSCH resources is 13 OFDM symbols, the DM-RS positions associated with the PDSCH transmission include only symbols 0, 3, 6, and 9.

9. The apparatus of any one of claims 1 to 8, further comprising transceiver circuitry coupled to the processing circuitry; and, one or more antennas coupled to the transceiver circuitry.

10. A computer-readable storage medium that carries instructions for execution by one or more processors of a user equipment, UE, the instructions to configure the UE for receiving a physical downlink shared channel, PDSCH, transmission in a 5G-New Radio (NR) communication network, and to cause the UE to:
decode radio resource control, RRC, signaling including downlink, DL, demodulation reference signal, DM-RS, configuration information, the DM-RS configuration information specifying a first DM-RS position and up to three additional DM-RS positions within a PDSCH transmission;
determine DM-RS positions configured for the PDSCH transmission based on a duration in Orthogonal Frequency Division Multiplexing, OFDM, symbols of scheduled PDSCH resources for the PDSCH transmission and the DM-RS configuration information,
wherein when the PDSCH transmission is configured in accordance with PDSCH mapping type B and a number of the OFDM symbols is configurable to be greater than 7, and wherein when the duration of the scheduled PDSCH resources is 8 OFDM symbols, the DM-RS positions associated with the PDSCH transmission include only symbols 0, 3, and 6; and
decode the DM-RS received within the PDSCH transmission at the determined DM-RS positions.

11. The computer-readable storage medium of claim 10, wherein the DM-RS is a front-loaded DM-RS, and the instructions further cause the UE to:
upon detecting a collision between the front-loaded DM-RS and resources reserved for a control resource set, CORESET, shift a first symbol of the front-loaded DM-RS to a symbol immediately after the CORESET.

12. The computer-readable storage medium of claim 11, wherein when the duration of the scheduled PDSCH resources is 7 OFDM symbols, the one or more processors receive the front-loaded DM-RS prior to a fourth symbol of the scheduled PDSCH resources.

13. The computer-readable storage medium of any one of claims 10 to 12, wherein when the duration of the scheduled PDSCH resources is 9 OFDM symbols, the DM-RS positions associated with the PDSCH transmission include only symbols 0, 5, and 7.

14. The computer-readable storage medium of any one of claims 10 to 13, wherein when the duration of the scheduled PDSCH resources is 10 OFDM symbols, the DM-RS positions associated with the PDSCH transmission include only symbols 0, 4, and 7.

15. A computer-readable storage medium that carries instructions for execution by one or more processors of a Next Generation Node-B, gNB, the instructions to configure the gNB for communicating a physical downlink shared channel, PDSCH, transmission in a 5G-New Radio, NR, communication network, and to cause the gNB to:
encode radio resource control, RRC, signaling including downlink, DL, demodulation reference signal, DM-RS, configuration information, the DM-RS configuration information specifying a first DM-RS position and up to three additional DM-RS positions within a PDSCH transmission; and
encode data for the PDSCH transmission, the PDSCH transmission including DM-RS positions configured based on a duration in Orthogonal Frequency Division Multiplexing, OFDM, symbols of scheduled PDSCH resources for the PDSCH transmission and the DM-RS configuration information,
wherein when the PDSCH transmission is configured in accordance with PDSCH mapping type B and a number of the OFDM symbols is configurable to be greater than 7, and wherein when the duration of the scheduled PDSCH resources is 8 OFDM symbols, the DM-RS positions associated with the PDSCH transmission include only symbols 0, 3, and 6.
